Europäisches Patentamt

European Patent Office

Office européen des brevets

(19)

(11) Veröffentlichungsnummer : **0 216 377 B1**

# (12) EUROPÄISCHE PATENTSCHRIFT

(45) Veröffentlichungstag der Patentschrift :
19.07.89

(21) Anmeldenummer : 86113176.1

(22) Anmeldetag : 25.09.86

(51) Int. Cl.⁴ : **B 60 K 20/12**, F 16 H 5/04

(54) **Mechanische Schaltvorrichtung für Wechselgetriebe von Fahrzeugen.**

(30) Priorität : 26.09.85 DE 3534321

(43) Veröffentlichungstag der Anmeldung :
01.04.87 Patentblatt 87/14

(45) Bekanntmachung des Hinweises auf die Patenterteilung : 19.07.89 Patentblatt 89/29

(84) Benannte Vertragsstaaten :
AT DE FR GB IT

(56) Entgegenhaltungen :
EP--A-- 0 072 464
FR--A-- 2 437 952
GB--A-- 1 170 987

(73) Patentinhaber : **Klöckner-Humboldt-Deutz Aktiengesellschaft
Deutz-Mülheimer-Strasse 111 Postfach 80 05 09
D-5000 Köln 80 (DE)**

(72) Erfinder : **Zenker, Walter
Pippelstein 49
D-5060 Bergisch Gladbach 3 (DE)**
Erfinder : **Welke, Helmut
Kasparstrasse 17
D-5000 Köln 90 (DE)**

## Beschreibung

Die Erfindung bezieht sich auf eine mechanische Schaltvorrichtung für Wechselgetriebe von Fahrzeugen, insbesondere Schlepper, mit einem in zwei etwa rechtwinklig zueinander verlaufenden Ebenen schwenkbaren Handschalthebel, der an einer Schaltvorrichtung angreift, deren bei Schaltvorgängen durch den Handschalthebel bewegte Stellglieder zur Übertragung von Schaltbewegungen über Schaltgestänge mit dem Wechselgetriebe verbunden sind, wobei der Handschalthebel mit dem einen Arm eines als Winkelhebel ausgebildeten Stellgliedes gekoppelt ist, der in seinem Scheitelpunkt ein Drehlager aufweist und beim Verschwenken mit dem anderen Arm axiale Bewegungen auf das Schaltgestänge ausübt.

Es ist aus der US-PS 3,741,031 eine mechanische Schaltvorrichtung der beschriebenen Art bekanntgeworden, deren Handschalthebel den einen Arm eines Winkelhebels bildet. Der andere Arm des in seinem Scheitelpunkt drehbar gelagerten Winkelhebels greift am Schaltgestänge an, so daß dieses bei entsprechender Betätigung des Handschalthebels axiale Stellbewegungen ausführt. Der Winkelhebel sitzt mit seinem im Scheitelpunkt liegenden Drehlager in einem hülsenförmigen Körper, der in fahrzeugfesten Führungen um seine Längsachse drehbar gelagert ist. Der Handschalthebel ragt durch eine schlitzförmige Öffnung in den hülsenförmigen Körper hinein, und dieser kann durch den Handschalthebel bei entsprechender Betätigung um seine Längsachse bewegt werden. Am hülsenförmigen Körper ist radial ein Hebel befestigt, der an einem zweiten Schaltgestänge zu dessen Betätigung angreift. Bei dieser bekannten Schaltvorrichtung sind somit zwei Schaltgestänge erforderlich, um die vorgesehenen Schaltbewegungen vom Handschalthebel zum Wechselgetriebe zu übertragen.

Der Erfindung liegt die Aufgabe zugrunde, eine mechanische Schaltvorrichtung der eingangs umrissenen Art zu schaffen, die mit möglichst einfachen Mitteln aufgebaut ist und zur Übertragung der Schaltbewegungen zum Wechselgetriebe nur ein Schaltgestänge erfordert.

Die Aufgabe wird erfindungsgemäß dadurch gelöst, daß der Handschalthebel mit dem einen Arm des Winkelhebels gelenkig verbunden und mit Abstand vor dieser Verbindung in einem fahrzeugfesten Lager schwenkbar abgestützt ist und daß das Drehlager des Winkelhebels an einem koaxial zum Schaltgestänge in einem fahrzeugfesten Lager drehbar geführten Trägerelement angeordnet ist, dessen drehfest mit diesem verbundenes Lagerteil vom Schaltgestänge drehfest und axial verschiebbar durchsetzt ist.

Eine solche Schaltvorrichtung zeichnet sich durch ihren einfachen sowie übersichtlichen Aufbau aus und erfordert zudem nur ein einziges Schaltgestänge, um vier verschiedene Schaltbewegungen vom Handschalthebel zum Wechselgetriebe zu übertragen.

In Weiterbildung der Erfindung ist der mit der Schaltvorrichtung verbundene Teil des Schaltgestänges als Schaltwelle ausgebildet, die mit den anderen Teilen der Schaltvorrichtung in einem fahrzeugfesten Gehäuse untergebracht und in diesem drehbar sowie axial verschiebbar gelagert ist.

Schließlich ist es konstruktiv vorteilhaft, wenn das Tragelement des Winkelhebels an der Ausgangsseite der Schaltwelle in einem im Gehäuse sitzenden Lager drehbar geführt ist, durch das die Schaltwelle mittels einer Kerbverzahnung o. dgl. drehfest und axial verschiebbar hindurchgeführt ist.

Ein Ausführungsbeispiel der Erfindung wird im folgenden anhand der Zeichnung näher beschrieben. Es zeigt :

Fig. 1 eine schematische Darstellung einer Schaltvorrichtung gemäß der Erfindung,

Fig. 2 eine Draufsicht auf einen Teil der schematischen Zeichnung gemäß dem Pfeil II in Fig. 1.

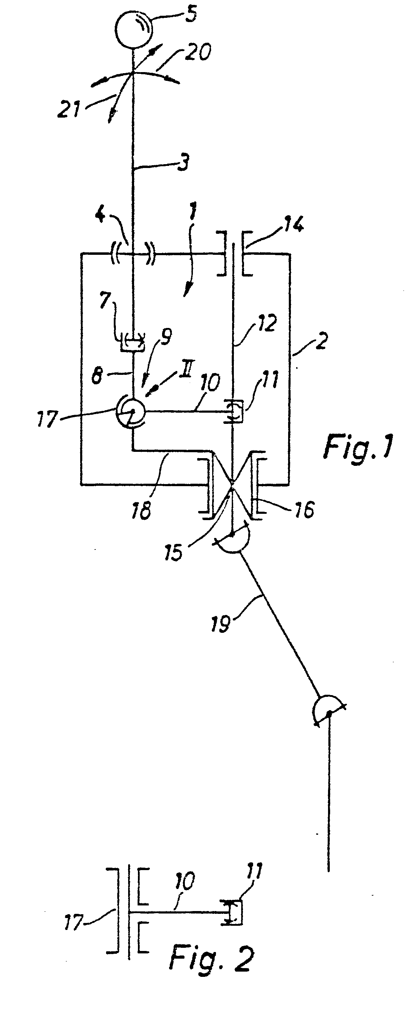

In den Fig. 1 und 2 ist eine mechanische Schaltvorrichtung 1 für ein Wechselgetriebe eines Fahrzeugs dargestellt, dessen Gehäuse mit 2 bezeichnet ist. Zur Betätigung der im Gehäuse 2 untergebrachten Schaltvorrichtung 1 dient ein Handschalthebel 3, der über ein Kugelgelenk 4 im Gehäuse 2 allseitig beweglich gelagert ist. Der Handschalthebel 3 hat an seinem oberen Ende einen Handknauf 5 und greift mit seinem unteren Ende über ein Kugelgelenk 7 an einem in Richtung des Handschalthebels 3 verlaufenden Arm 8 eines Winkelhebels 9 an. Mit seinem anderen Arm 10 greift der Winkelhebel 9 über ein Kugelgelenk 11 an einer Schaltwelle 12 an, die mittels Lager 14 und 15 im Gehäuse 2 gehaltert ist. Von den genannten Lagern 14, 15 ist ersteres als Dreh- und Schiebelager sowie letzteres lediglich als Schiebelager 15 ausgebildet, das seinerseits in einem im Gehäuse befestigten Lager 16 sitzt. Der Winkelhebel 9 hat gemäß Fig. 2 ein in seinem Scheitelpunkt angreifendes Drehlager 17, das Schwenkbewegungen des Winkelhebels 9 in einer durch die beiden Arme 8 und 10 verlaufenden Ebene erlaubt. Ein Teil des Drehlagers 17 sitzt an einem Ende eines Tragelements 18, das anderenends fest mit dem drehbaren Teil des Lagers 16 verbunden ist. An die Schaltwelle 12 schließt sich ein zum nicht gezeigten Wechselgetriebe führendes gelenkiges Schaltgestänge 19 an.

Bei Betätigung des Handschalthebels 3 in Richtung des Pfeiles 20 wird der Winkelhebel 9 über das Kugelgelenk 7 in seinem Lager 17 verschwenkt, so daß der Arm 10 die Schaltstange 12 über das Kugelgelenk 11 axial in der einen oder anderen Richtung verschiebt. Damit wird auch das Schaltgestänge 19 in seiner Längsrichtung betätigt, und es erfolgt ein entsprechender Schaltvorgang im Wechselgetriebe. Wird dagegen der Handschalthebel 3 in Richtung des Pfeils 21 verschwenkt, dann wird der über das Tragelement 18 im Lager 16 schwenkbar geführte Winkelhebel 9 über das Kugelgelenk 7 im oder entgegen dem Uhrzeigersinn verschwenkt. Dabei wird die Schaltwelle 12 durch ihre drehfeste Führung im Lager 16 ebenfalls in der einen oder anderen Richtung gedreht, so daß auch das mit der Schaltwelle 12 drehfest gekoppelte Schaltgestänge 19 entsprechende Drehbewegungen auf das Schaltsystem am Wechselgetriebe überträgt.

## Patentansprüche

1. Mechanische Schaltvorrichtung für Wechselgetriebe von Fahrzeugen, insbesondere Schlepper, mit einem in zwei etwa rechtwinklig zueinander verlaufenden Ebenen schwenkbaren Handschalthebel (3), der an einer Schaltvorrichtung (1) angreift, deren bei Schaltvorgängen durch den Handschalthebel (3) bewegte Stellglieder (9, 12, 18) zur Übertragung von Schaltbewegungen über Schaltgestänge (9) mit dem Wechselgetriebe verbunden sind, wobei der Handschalthebel (3) mit dem einen Arm (8) eines als Winkelhebel (9) ausgebildeten Stellgliedes gekoppelt ist, der in seinem Scheitelpunkt ein Drehlager (17) aufweist und beim Verschwenken mit dem anderen Arm (10) axiale Bewegungen auf das Schaltgestänge (12) ausübt, dadurch gekennzeichnet, daß der Handschalthebel (3) mit dem einen Arm (8) des Winkelhebels (9) gelenkig verbunden und mit Abstand vor dieser Verbindung in einem fahrzeugfesten Lager (4) schwenkbar abgestützt ist und daß das Drehlager (17) des Winkelhebels (9) an einem koaxial zum Schaltgestänge (12) in einem fahrzeugfesten Lager (16) drehbar geführten Tragelement (18) angeordnet ist, dessen drehfest mit diesem verbundenes Lagerteil vom Schaltgestänge (12) drehfest und axial verschiebbar durchsetzt ist.

2. Schaltvorrichtung nach Anspruch 1, dadurch gekennzeichnet, daß der mit der Schaltvorrichtung (1) verbundene Teil des Schaltgestänges (19) als Schaltwelle (12) ausgebildet ist, die mit den anderen Teilen (3, 9, 18) der Schaltvorrichtung (1) in einem fahrzeugfesten Gehäuse (2) untergebracht und in diesem drehbar sowie axial verschiebbar gelagert ist.

3. Schaltvorrichtung nach den Ansprüchen 1 und 2 dadurch gekennzeichnet, daß das Tragelement (18) des Winkelhebels (9) an der Ausgangsseite der Schaltwelle (12) in einem im Gehäuse sitzenden Lager (16) drehbar geführt ist durch das die Schaltwelle (12) mittels einer Kerbverzahnung o. dgl. drehfest und axial verschiebbar hindurchgeführt ist.

## Claims

1. A mechanical shifting device for the change-speed gear of a vehicle, especially of a tractor, the device comprising a manually operable shift lever (3), which is movable in two substantially perpendicularly extending planes and which serves to act on the shifting device (1) the shifting links (9, 12, 18) of which are moved — during shifting operations — by the shift lever (3) and are connected via the link (9) to the change-speed gear so as to transmit the shifting motions thereto, wherein the shaft lever (3) is coupled to one arm (8) of the link (9) which is a bell-crank lever, wherein the bell-crank lever (9) has at its fulcrum a swivel bearing (17), and wherein, when the lever is swivelled, its other arm (10) causes the link (12) to move in axial direction, characterized in that the manually operable shift lever (3) is articulatedly connected to the one arm (8) of the bell-crank lever (9) and is swivably supported — in front of its connection to the one lever arm and at a distance therefrom — in a bearing (4) fixed to the vehicle, that the swivel bearing (17) of the bell-crank lever (9) is arranged on a support (18) which is rotatably mounted in a bearing (16) fixed to the vehicle and extending coaxially with the link (12), and in that the part of the support disposed fast against rotation in the bearing is penetrated rotationally fast and axially displaceable by the link (12).

2. A shifting device according to claim 1, characterized in that a part of a shifting linkage (19) connected to the shifting device (1) is constructed as a gear-shift-lever shaft (12), and in that this shaft is housed — together with the other elements (3, 9, 18) of the shifting device (1) — in a casing (2) and is supported therein so as to be rotatable and axially displaceable.

3. A shifting device according to claim 1 or claim 2, characterized in that the support (18) of the bell-crank lever (9) is rotatably held in the bearing (16) — which is disposed in the casing — at the output-side of the gear-shift-lever shaft (12), and in that the gear-shift-lever shaft (12) passes through the support and is held therein, by means of a serration or the like, fast against rotation and axially displaceable.

## Revendications

1. Dispositif de manoeuvre mécanique pour boîtes de vitesses de véhicules, en particulier de tracteurs, avec un levier de manoeuvre à main (3) pivotant dans deux plans se développant approximativement perpendiculairement entre-eux, venant en prise sur un dispositif de manoeuvre (1) dont les organes de réglage (9, 12, 18), mus au moyen du levier de manoeuvre à main (3), lors des changements de vitesse, sont reliés à la boîte de vitesses par une tringlerie de manoeuvre (9) pour transmettre les mouvements de manoeuvre, le levier de manoeuvre à main (3) étant accouplé à un bras (8) élément de réglage réalisé sous forme de levier coudé (9), présentant à son sommet un palier tournant (17) et exerçant des mouvements axiaux sur la tringlerie de manoeuvre (12) lors de la rotation avec l'autre bras (10) caractérisé en ce que le levier de manoeuvre à main (3) est relié, de manière articulée, à l'un des bras (8) du levier coudé et soutenu pivotant, à distance de cette liaison, dans un palier (4) fixe sur le véhicule et en ce que le palier tournant (17) du levier coudé (9) est disposé sur un élément support (18) guidé tournant dans un palier (16) fixe sur le véhicule, coaxialement à la tringlerie de manoeuvre (12), dont la partie de palier reliée fixe en rotation à celle-ci est traversée par la tringlerie de manoeuvre (12) en étant fixe en rotation et mobile axialement.

2. Dispositif de manoeuvre selon la revendication 1, caractérisé en ce que la partie de la tringlerie de manoeuvre (19) reliée au dispositif de manoeuvre (1) est réalisée sous forme d'arbre de manoeuvre (12), logé avec les autres parties (3, 9, 18) du dispositif de manoeuvre (1) dans un carter (2) fixe du véhicule et monté tournant dans celui-ci ainsi que mobile axialement.

3. Dispositif de manoeuvre selon les revendications 1 et 2, caractérisé en ce que l'élément support (18) du levier coudé (9) est guidé tournant sur le côté sortie de l'arbre de manoeuvre (12), dans un palier (16) reposant dans le carter, à travers lequel l'arbre de manoeuvre (12) est guidé au moyen d'une denture à cannelures ou similaire et mobile axialement.

*Fig.1*

*Fig. 2*